# EUROPÄISCHE PATENTSCHRIFT

(11) **EP 2 558 273 B1**
(45) Veröffentlichungstag und Bekanntmachung des Hinweises auf die Patenterteilung: **21.12.2016**
(21) Anmeldenummer: 11712268.9
(22) Anmeldetag: 06.04.2011
(51) Int. Cl.: B29C 53/60, F16L 11/08, F16L 11/16, B29K 81/00, B29K 23/00, B29K 27/12, B29K 77/00, B29K 71/00

(54) **FLEXIBLES ROHR UND VERFAHREN ZU DESSEN HERSTELLUNG**
FLEXIBLE TUBE AND METHOD FOR PRODUCING THE SAME
TUYAU FLEXIBLE ET SON PROCÉDÉ DE FABRICATION

(30) Priorität: 13.04.2010 DE 102010003916
(43) Veröffentlichungstag der Anmeldung: 20.02.2013
(73) Patentinhaber: Evonik Degussa GmbH, 45128 Essen (DE)
(72) Erfinder: KUHMANN, Karl, 48249 Dülmen (DE); DOWE, Andreas, 46325 Borken (DE); GÖRING, Rainer, 46325 Borken (DE)
(86) Internationale Anmeldenummer: PCT/EP2011/055351
(87) Internationale Veröffentlichungsnummer: WO 2011/128237

(56) Entgegenhaltungen:
- EP-A1- 1 975 495
- WO-A1-99/67561
- WO-A1-2005/028198
- WO-A1-2007/006215
- WO-A1-2010/026749
- AU-A- 8 042 175
- US-A- 5 876 548
- US-A1- 2007 125 438

## Beschreibung

Gegenstand der vorliegenden Erfindung sind ein flexibles Rohr mehrschichtigen Aufbaus mit unverbundenen Schichten sowie ein Verfahren zu dessen Herstellung. Ein derartiges Rohr wird im Folgenden der Einfachheit halber und dem englischen Sprachgebrauch entsprechend als Unbonded Flexible Pipe bezeichnet. Es setzt der Diffusion von Gasen aus einem beförderten Fluid einen hohen Widerstand entgegen und kann daher mit besonderem Vorteil zur Beförderung von Rohöl, Erdgas, Methanol, CO₂ und dergleichen eingesetzt werden.

Unbonded Flexible Pipes sind als solche Stand der Technik. Derartige Rohre enthalten eine innere Auskleidung, üblicherweise in Form eines Kunststoffrohres, als Barriere gegen den Austritt des beförderten Fluids, sowie eine oder mehrere Armierungsschichten auf der Außenseite dieser inneren Auskleidung. Das Unbonded Flexible Pipe kann zusätzliche Schichten enthalten, beispielsweise eine oder mehrere Armierungsschichten auf der Innenseite der inneren Auskleidung, um das Zusammenfallen der inneren Auskleidung bei hohem Außendruck zu verhindern. Eine derartige innere Armierung wird üblicherweise als Karkasse bezeichnet. Darüber hinaus kann eine äußere Umhüllung enthalten sein, um eine Barriere gegen das Eindringen von Flüssigkeit aus der äußeren Umgebung in die Armierungsschichten oder weitere innen liegende polymere oder metallische Funktionsschichten vorzusehen. In vielen Fällen wird zwischen den äußeren Armierungsschichten eine Thermoplastschicht eingefügt, etwa in Form von gewickelten "anti-wear tapes", um Abrieb an der Metallkonstruktion durch Reibung zu verhindern.

Typische Unbonded Flexible Pipes sind beispielsweise in der WO 01/61232, der US 6 123 114 und der US 6 085 799 beschrieben; sie sind darüber hinaus in API Recommended Practice 17B, "Recommended Practice for Flexible Pipe", 3. Auflage, März 2002 sowie in API Specification 17J, "Specification for Unbonded Flexible Pipe" 2. Auflage, November 1999 näher charakterisiert.

Der Ausdruck "unbonded" bedeutet in diesem Zusammenhang, dass mindestens zwei der Schichten, einschließlich Armierungsschichten und Kunststoffschichten, nicht konstruktiv miteinander verbunden sind. In der Praxis enthält das Rohr mindestens zwei Armierungsschichten, die über die Rohrlänge hinweg weder direkt noch indirekt, d. h. über weitere Schichten, miteinander verbunden sind. Dadurch wird das Rohr biegsam und ausreichend flexibel, um es für Transportzwecke aufzurollen.

Derartige Unbonded Flexible Pipes werden in verschiedenen Ausführungen in Offshore-Anwendungen sowie in verschiedenen Onshore-Anwendungen für den Transport von Flüssigkeiten, Gasen und Aufschlämmungen eingesetzt. Sie können beispielsweise für den Transport von Fluiden dort eingesetzt werden, wo über die Länge des Rohres hinweg ein sehr hoher oder ein sehr unterschiedlicher Wasserdruck existiert, etwa in Form von Steigleitungen, die vom Meeresboden hoch zu einer Einrichtung an oder nahe der Meeresoberfläche verlaufen, ferner generell als Rohre für den Transport von Flüssigkeiten oder Gasen zwischen verschiedenen Einrichtungen, als Rohre, die in großer Tiefe auf dem Meeresboden verlegt sind, oder als Rohre zwischen Einrichtungen nahe der Meeresoberfläche.

In herkömmlichen flexiblen Rohren bestehen die Armierungsschicht oder die Armierungsschichten meistens aus spiralförmig angeordneten Stahldrähten, Stahlprofilen oder Stahlbändern, wobei die einzelnen Schichten mit verschiedenen Windungswinkeln relativ zur Rohrachse ausgebildet sein können. Es gibt daneben auch Ausführungsformen, bei denen mindestens eine Armierungsschicht bzw. alle Armierungsschichten aus Fasern bestehen, beispielsweise aus Glasfasern, etwa in Form von Faserbündeln oder Fasergeweben, die in der Regel in eine polymere Matrix eingebettet sind.

Die innere Auskleidung besteht im Stand der Technik üblicherweise aus einem Polyolefin wie Polyethylen, das auch vernetzt sein kann, aus einem Polyamid wie PA11 oder PA12 oder aus Polyvinylidenfluorid (PVDF).

Polyethylen hat den Nachteil, im Kontakt mit Rohöl oder Erdgas stark zu quellen und dann zu kriechen. Zudem permeiert das beförderte unpolare Medium stark durch die Polyethylenwandung nach außen. Aus diesem Grunde wird Polyethylen in der Regel nicht für Leitungen mit direktem Kontakt zu Produktströmen eingesetzt, sondern überwiegend für sogenannte Wasserinjektionsleitungen.

Polyamide wie PA11 oder PA12 sind wegen ihrer sehr guten mechanischen Eigenschaften, der exzellenten Beständigkeit gegenüber Kohlenwasserstoffen und der nur geringen Quellung als Material für die innere Auskleidung sehr gut geeignet. Die besondere Eignung von Polyamiden wurde in der Veröffentlichung OTC 5231 "Improved Thermoplastic Materials for Offshore Flexible Pipes" detailliert beschrieben. Sie können jedoch nur bis maximal ca. 70 °C eingesetzt werden, da bei höheren Temperaturen zunehmende Hydrolyse durch das im Rohöl bzw. Erdgas enthaltene Prozesswasser eintritt. Durch diese Hydrolyse wird das Molekulargewicht des Polyamids so stark verringert, dass sich die mechanischen Eigenschaften erheblich verschlechtern und das Rohr schließlich versagt. Ein detailliertes Prüfprozedere zur Bestimmung der Hydrolyseeigenschaften wird in der API 17TR2 für PA11 beschrieben und kann für PA12 gleichermaßen angewandt werden.

PVDF wird bis maximal 130 °C eingesetzt. Es ist je nach Modifikation steif bei geringer Druckverformbarkeit auch bei höheren Temperaturen bis etwa 130 °C. Bei Temperaturen oberhalb 130 °C ist bei einem Abfall des Innendrucks jedoch mit Blistering und Microfoaming zu rechnen. PVDF quillt insbesondere in überkritischem CO₂ stark bis etwa 25 %; das beim Druckabfall auftretende Blistering resultiert aus der guten Permeationssperre, die gleichbedeutend mit schlechter Diffusion ist. Dabei tritt innerhalb der Schicht lokale Gasdesorption auf, wobei die Kohäsionsfestigkeit des Materials übertroffen wird.

In vielen Fällen tritt Rohöl oder Erdgas mit Temperaturen von deutlich über 130 °C aus der Quelle aus. Um derartige Quellen über flexible Rohrleitungen zu erschließen, ist ein vorgeschalteter Prozessschritt zur Kühlung des Mediums nötig. Es wäre daher wünschenswert, ein Unbonded Flexible Pipe zur Verfügung zu haben, das auch bei höheren Temperaturen eingesetzt werden kann, um diesen Prozessschritt einsparen zu können.

In der WO 2008/125807 wird ein flexibles Rohr zur Beförderung beispielsweise von heißem Methanol in einem Umbilical beschrieben, das eine innere Schicht aus PEEK oder Polyphenylensulfid enthält. Der Innendurchmesser dieses Rohres liegt im Bereich von 4 bis 500 mm, während die Schichtdicke des PEEK 0,7 bis 5 mm beträgt. Da bei Unbonded Flexible Pipes jedoch eine Schichtdicke von mindestens 2 mm und typischerweise 3 bis 20 mm benötigt wird, um die für Montage und Handhabung nötige mechanische Stabilität der Schicht zu gewährleisten, würde hier bei der bekannten hohen Steifigkeit von PEEK ein Rohr resultieren, das nicht ausreichend flexibel ist, um sich mit vertretbarem Radius auf eine Trommel wickeln zu lassen.

Eine andere Ausführungsform eines flexiblen mehrschichtigen Rohres mit einem PEEK-Innenrohr ist in der WO 99/67561 beschrieben. Das Rohr besteht aus Polymer- und Textilschichten, die über die Länge des Rohres hinweg konstruktiv miteinander verbunden sind; die typische Wanddicke des Innenrohrs beträgt 6 bis 12 mm.

In der WO 2006/047774 wird ein mehrschichtiges Rohr mit einer Schicht beschrieben, die aus einem teilaromatischen Polyamid besteht.

Die US 5 876 548 beschreibt ein flexibles Metallrohr, bei dem auf einer Karkasse eine Elastomerschicht und darüber eine Schicht aus einem schrumpffähigen Polymer aufgebracht ist; neben einer Vielzahl anderer Möglichkeiten wird hierfür auch PEEK genannt.

In der WO 2005/028198 wird ein Unbonded Flexible Pipe beschrieben, bei dem die innere Auskleidung aus einer dickeren Polymerschicht und einem dünneren Film mit Sperreigenschaften besteht. Für die Materialien der dickeren Polymerschicht und des Films sind zwei umfangreiche identische Listen angegeben; der Film kann darüber hinaus aus Metall bestehen. In beiden Listen werden PEEK, PEKK und Polyphenylensulfid (PPS) genannt.

Das Rohr der US 5 934 335 enthält eine Schicht, die aus PFA bestehen kann. PFA kriecht jedoch bei höheren Temperaturen stark und füllt je nach Druckrichtung die Zwischenräume zwischen den gelenkigen Bereichen der Karkasse oder der nach außen anschließenden Armierungsschicht aus, was die Flexibilität des Rohrs erheblich verringert. In den deformierten Bereichen bilden sich darüber hinaus Spannungsrisse, die zur Zerstörung der inneren Auskleidung führen können. Die US 5 934 335 empfiehlt daher, die Zwischenräume der Karkasse mit einem Elastomer zu füllen.

Bei der Extrusion der jeweiligen Polymerschichten ist der Fachmann mit einer Reihe von Problemen konfrontiert. Zum einen ist die Extrusion eines Rohres mit großem Innendurchmesser bei hochschmelzenden Polymeren oder bei Formmassen auf Basis von Polymeren, die von Natur aus nur eine geringe Schmelzefestigkeit besitzen, problematisch. Zum anderen dringt bei Extrusion auf die Karkasse oder eine Armierungsschicht die Schmelze der Formmasse in die Zwischenräume der Stahlkonstruktion ein, was zum Verlust der Flexibilität und aufgrund unterschiedlicher lokaler Abkühlgeschwindigkeiten zu inneren Spannungen führt, die zum Versagen der Polymerschicht führen können. Daher ist es seit langem Stand der Technik, Funktionsschichten durch Wickeln von Tapes aufzubringen.

Das Wickeln von Tapes auf ein Innenrohr ist in der WO 2004/048833 beschrieben. Die Tapes bestehen beispielsweise aus einer Polyolefinformmasse; sie können mit einem Klebstoff beschichtet sein, um sie im Überlappungsbereich zu fixieren.

In der US 2007/0125438 wird ein flexibles Rohr beschrieben, das eine gewickelte Schicht aus Tapes enthält, die aus Polytetrafluorethylen (PTFE) bestehen. Damit sind Betriebstemperaturen über 130 °C möglich.

Die US 2004/0060610 beschreibt ein Unbonded Flexible Pipe, das von innen nach außen eine Karkasse, eine spiralförmig gewickelte Schicht aus Plastiktapes, eine darüber extrudierte druckfeste Schicht aus Kunststoff, mindestens eine Armierungsschicht sowie eine äußere Umhüllung enthält.

Derartige gewickelte Tapes besitzen aber den Nachteil, dass sie sich verschieben können, was dazu führen kann, dass die darunter liegende Schicht stellenweise nicht mehr abgedeckt ist, so dass beispielsweise dort das Material der nächsten Schicht der innen liegenden Umhüllung durch den Außendruck in die Zwischenräume der Karkasse kriecht oder dass im Falle eines Anti-Wear Tapes dort Metall auf Metall reibt. Ein weiterer Nachteil ist darin begründet, dass ein gewickeltes Tape keine ausreichende Sperrwirkung gegen die Permeation von Komponenten des beförderten Mediums besitzt, erst recht dann nicht, wenn die beim Wickeln aufgebrachte Spannung im Laufe der Zeit durch Relaxation verloren gegangen ist.

Die Aufgabe der Erfindung besteht darin, diese Nachteile zu vermeiden.

Diese Aufgabe wird nach Maßgabe des Anspruchs 1 dadurch gelöst, dass bei der Herstellung eines flexiblen Rohrs mehrschichtigen Aufbaus mit unverbundenen Schichten eine Schicht dadurch gebildet wird, dass ein Tape aus einer Kunststoffformmasse spiralig auf eine weiter innen liegende Schicht aufgewickelt wird, wonach an Überlappungsbereichen gleichzeitig oder anschließend die obere und die untere Lage des Tapes miteinander verschweißt werden.

Das Tape wird unter Spannung gewickelt, damit es durch den Anpressdruck kraftschlüssig mit der Unterlage verbunden ist.

In einer möglichen Ausführungsform befindet sich auf der inneren Seite der inneren Auskleidung des Unbonded Flexible Pipes eine Karkasse. Derartige Karkassen und ihre Ausführung sind Stand der Technik. In einer weiteren möglichen Ausführungsform enthält das Unbonded Flexible Pipe keine Karkasse, vor allem dann, wenn es nicht unter hohen Außendrucken betrieben werden soll.

Das Unbonded Flexible Pipe enthält darüber hinaus auf der Außenseite der inneren Auskleidung eine oder mehrere Armierungsschichten, die aus spiralförmig angeordneten Stahldrähten, Stahlprofilen oder Stahlbändern bestehen. Die Ausführung dieser Armierungsschichten ist Stand der Technik. Vorzugsweise ist mindestens eine dieser Armierungsschichten so aufgebaut, dass sie dem Innendruck standhält, und mindestens eine weitere dieser Armierungsschichten ist so aufgebaut, dass sie Zugkräften standhält. An die Armierungsschicht bzw. Armierungsschichten kann sich eine äußere Umhüllung anschließen, üblicherweise in Form eines Rohres oder Schlauches aus einer thermoplastischen Formmasse oder einem Elastomer.

In der ersten Ausführungsform wird das Tape auf die Karkasse gewickelt und dann verschweißt. Anschließend können weitere Schichten der inneren Auskleidung auf das Tape extrudiert werden. Primäre Funktionen des Tapes sind hier Kriechschutz und/oder Permeationssperre.

In der zweiten Ausführungsform wird das Tape auf die rohrförmige innere Auskleidung gewickelt und dann verschweißt. Eine derartige Konstruktion ist dann sinnvoll, wenn im Betrieb der Innendruck des Rohrs höher ist als der Außendruck; mit dem Tape kann das Kriechen der inneren Auskleidung in die Lücken der Stahlkonstruktion der nächstfolgenden Armierungsschicht verhindert werden.

In der dritten Ausführungsform wird das Tape auf eine Armierungsschicht gewickelt und dann verschweißt. Es trennt dann zwei metallische Armierungsschichten voneinander und fungiert als Anti-Wear Tape.

Im gleichen Rohr können erste, zweite und dritte Ausführungsform miteinander kombiniert werden, wobei die Materialien der Tapes unterschiedlich sein können. Beispielsweise kann ein Rohr ein erstes Tape aus einer PEEK-Formmasse auf der Karkasse enthalten, das als Sperrschicht sowie als Kriechschutz wirkt. Nach außen hin folgt eine aufextrudierte Schicht aus einem Fluorpolymeren wie z. B. PFA, die wiederum durch ein Tape aus beispielsweise einer Polyphenylensulfid (PPS)-Formmasse, einer PEEK-Formmasse oder einer PPA-Formmasse abgedeckt ist. Zwischen den folgenden Armierungsschichten sind dann Anti-Wear Tapes aus einer Formmasse mit niedrigem Gleitreibungskoeffizienten, beispielsweise einer PEEK-Formmasse, angebracht.

Geeignete Materialien für das Tape sind Formmassen vorzugsweise auf Basis von teilkristallinen Polymeren, beispielsweise olefinischen Polymeren, Polyamiden, Fluorpolymeren, Polyalkylennaphthalat, Polyphenylsulfon, Polyarylenetherketonen, Polyphenylensulfid oder einem Polyarylenetherketon/Polyphenylensulfid-Blend. Hierbei kann das Tape einschichtig oder auch mehrschichtig sein, beispielsweise zweischichtig, dreischichtig oder vierschichtig.

Das Tapematerial kann aus einem Sperrschichtmaterial gegen die Diffusion saurer, korrosiver Bestandteile wie H₂S bzw. CO₂ bestehen. Alternativ hierzu kann bei mehrschichtiger Ausführung das Tape eine Sperrschicht gegen die Diffusion saurer, korrosiver Bestandteile wie H₂S bzw. CO₂ enthalten, beispielsweise eine Schicht aus einer EVOH-Formmasse oder eine Metallfolie, vorzugsweise aus Aluminium. Generell kann bei mehrschichtiger Ausführung in den Fällen, wo eine Schichtenhaftung erwünscht ist, die verwendeten Schichtenmaterialien aber miteinander nicht kompatibel sind, eine geeignete Haftvermittlerschicht oder ein Kleber mitverwendet werden. Beide Oberflächen des Tapes bestehen vorzugsweise aus Formmassen gleicher oder ähnlicher Zusammensetzung, das heißt aus Formmassen des gleichen Basispolymeren, oder aus Formmassen auf Basis von miteinander verträglichen Polymeren, um eine gute Verschweißbarkeit zu gewährleisten.

Beispiele für mögliche Schichtenanordnungen sind:
Polyamid/PPS/Polyamid
Polyamid/Polyalkylennaphthalat/Polyamid
Polypropylen /Polyalkylennaphthalat/Polypropylen
Polyamid/Polyalkylennaphthalat/Polypropylen/ Polyamid
Polyamid/Polyarylenetherketon/Polyamid
Polyarylenetherketon/Polyamid/Polyarylenetherketon
HDPE oder PP/PPS/HDPE oder PP
HDPE oder PP/Polyphenylsulfon/HDPE oder PP
PVDF/Polyarylenetherketon/PVDF
PVDF/PPS/PVDF
PVDF/PPS/anderes Fluorpolymer
PVDF/Polyphenylsulfon/PVDF
Polyamid/EVOH/Polyamid
Polyamid/EVOH/Polypropylen/Polyamid
HDPE oder PP/EVOH/HDPE oder PP
PVDF/EVOH/PVDF
Polyamid/Metallfolie
Polyamid/Metallfolie/Polyamid
HDPE oder PP/ Metallfolie/HDPE oder PP
Fluorpolymer/Metallfolie/Fluorpolymer

Das für das Tape verwendete olefinische Polymer kann in erster Linie ein Polyethylen, insbesondere ein Polyethylen hoher Dichte (HDPE), oder ein isotaktisches oder syndiotaktisches Polypropylen sein. Das Polypropylen kann ein Homo- oder ein Copolymer sein, beispielsweise mit Ethylen oder 1-Buten als Comonomer, wobei Random- als auch Blockcopolymere eingesetzt werden können. Darüber hinaus kann das Polypropylen auch schlagzähmodifiziert sein, beispielsweise dem Stand der Technik entsprechend mittels Ethylen-Propylen-Kautschuk (EPM) oder EPDM. Das ebenfalls erfindungsgemäß verwendbare syndiotaktische Polystyrol kann auf bekannte Weise durch metallocenkatalysierte Polymerisation von Styrol hergestellt werden.
Das für das Tape verwendete Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA6 oder PA66. In einer bevorzugten Ausführungsform enthalten die Monomereinheiten des Polyamids im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Als Polyamid kann vorteilhafterweise auch ein teilaromatisches Polyamid verwendet werden, dessen Dicarbonsäureanteil zu 5 bis 100 Mol-% von aromatischer Dicarbonsäure mit 8 bis 22 C-Atomen herrührt und das einen Kristallitschmelzpunkt Tₘ, bestimmt gemäß ISO 11357 beim 2. Aufheizen, von mindestens 260 °C, vorzugsweise von mindestens 270 °C und besonders bevorzugt von mindestens 280 °C besitzt. Derartige Polyamide werden üblicherweise als PPA bezeichnet. Sie sind herstellbar aus einer Kombination von Diamin und Dicarbonsäure, gegebenenfalls unter Zusatz einer ω-Aminocarbonsäure oder dem entsprechenden Lactam. Geeignete Typen sind beispielsweise PA66/6T, PA6/6T, PA6T/MPMDT (MPMD steht für2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer ω-Aminocarbonsäure bzw. einem Lactam.

Neben Polyamid kann die Formmasse weitere Komponenten enthalten wie z.B. Schlagzähmodifikatoren, andere Thermoplaste, Weichmacher und andere übliche Zusatzstoffe. Erforderlich ist nur, dass das Polyamid die Matrix der Formmasse bildet.

Das für das Tape verwendete Fluorpolymer kann beispielsweise ein Polyvinylidenfluorid (PVDF), ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Chlortrifluorethylen-Perfluoralkylvinylether-Tetrafluorethylen-Copolymer (CPT), ein Tetrafluorethylen-Hexafluorpropen-Copolymer (FEP) oder ein Tetrafluorethylen-Perfluoralkylvinylether-Copolymer (PFA) sein. In Frage kommen auch Copolymere auf Basis von Vinylidenfluorid, die bis zu 40 Gew.-% andere Monomere aufweisen wie beispielsweise Trifluorethylen, Chlortrifluorethylen, Ethylen, Propen und Hexafluorpropen.

Polyphenylensulfon (PPSU) wird beispielsweise unter dem Handelsnamen Radel^{®} von Solvay Advanced Polymers produziert. Es kann aus 4,4'-Dihydroxybiphenyl und 4,4'-Dihydroxydiphenylsulfon durch nucleophile Substitution hergestellt werden. Für den Einsatz als Anti-Wear Tape ist insbesondere auch ein PPSU/Fluorpolymer-Blend geeignet, beispielsweise ein PPSU/PTFE-Blend.

Das ebenfalls verwendbare Polyarylenetherketon enthält Einheiten der Formeln

(-Ar-X-) und (-Ar'-Y-),

wobei Ar und Ar' einen zweiwertigen aromatischen Rest darstellen, vorzugsweise 1,4-Phenylen, 4,4'-Biphenylen sowie 1,4-, 1,5- oder 2,6-Naphthylen. X ist eine elektronenziehende Gruppe, bevorzugt Carbonyl oder Sulfonyl, während Y eine andere Gruppe wie O, S, CH₂, Isopropyliden oder dergleichen darstellt. Hierbei stellen mindestens 50 %, bevorzugt mindestens 70 % und besonders bevorzugt mindestens 80 % der Gruppen X eine Carbonylgruppe dar, während mindestens 50 %, bevorzugt mindestens 70 % und besonders bevorzugt mindestens 80 % der Gruppen Y aus Sauerstoff bestehen.

In der bevorzugten Ausführungsform bestehen 100 % der Gruppen X aus Carbonylgruppen und 100 % der Gruppen Y aus Sauerstoff. In dieser Ausführungsform kann das Polyarylenetherketon beispielsweise ein Polyetheretherketon (PEEK; Formel I), ein Polyetherketon (PEK; Formel II), ein Polyetherketonketon (PEKK; Formel III) oder ein Polyetheretherketonketon (PEEKK; Formel IV) sein, jedoch sind natürlich auch andere Anordnungen der Carbonyl- und Sauerstoffgruppen möglich.

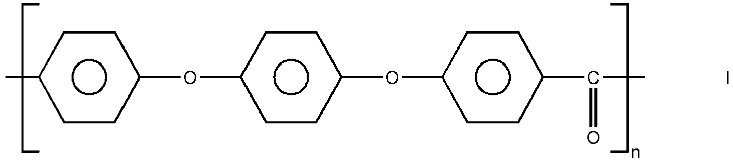

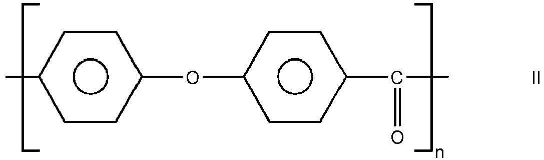

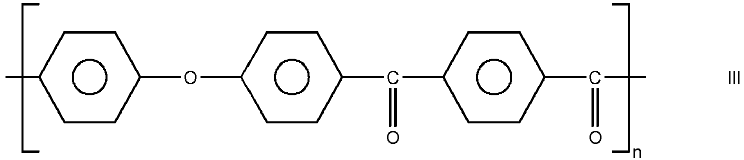

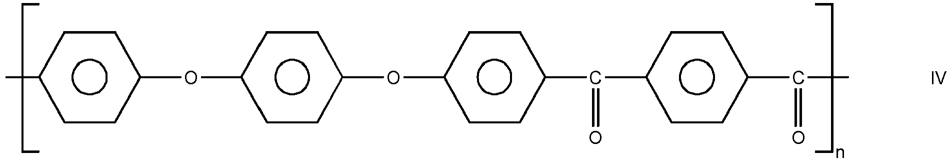

Das Polyarylenetherketon ist teilkristallin, was sich beispielsweise in der DSC-Analyse durch Auffinden eines Kristallitschmelzpunkts Tₘ äußert, der größenordnungsmäßig in den meisten Fällen um 300 °C oder darüber liegt.

Das für das Tape verwendete Polyphenylensulfid enthält Einheiten der Formel

(-C₆H₄-S-);

Vorzugsweise besteht es zu mindestens 50 Gew.-%, mindestens 70 Gew.-% bzw. mindestens 90 Gew.-% aus diesen Einheiten. Die restlichen Einheiten können solche sein, wie sie oben im Falle des Polyarylenetherketons angegeben sind, oder tri- oder tetrafunktionelle Verzweigereinheiten, die aus der Mitverwendung beispielsweise von Trichlorbenzol oder Tetrachlorbenzol bei der Synthese resultieren. Polyphenylensulfid ist in einer Vielzahl von Typen bzw. Formmassen handelsüblich.

Bei den Polyarylenetherketon/Polyphenylensulfid-Blends können beide Komponenten in jedem denkbaren Mischungsverhältnis vorliegen, so dass der Zusammensetzungsbereich von reinem Polyarylenetherketon bis zu reinem Polyphenylensulfid lückenlos überstrichen wird. Im Allgemeinen enthält das Blend mindestens 0,01 Gew.-% Polyarylenetherketon bzw. mindestens 0,01 Gew.-% Polyphenylensulfid. In einer bevorzugten Ausführungsform enthält das Blend mindestens 50 Gew.-% Polyarylenetherketon.

Ethylen-Vinylalkohol-Copolymere (EVOH) sind seit langem bekannt. EVOH ist ein Copolymer aus Ethylen und Vinylalkohol und wird manchmal auch als EVAL bezeichnet. Der Ethylengehalt im Copolymeren beträgt in der Regel 25 bis 60 Mol-% und insbesondere 28 bis 45 Mol-%. Eine Vielzahl von Typen ist im Handel erhältlich, beispielsweise von Kuraray unter der Handelsbezeichnung EVAL^{™}.

Das Polyalkylennaphthalat leitet sich von einem aliphatischen oder cycloaliphatischen Diol mit 2 bis 8 C-Atomen sowie einer Naphthalindicarbonsäure her. Geeignete Diole sind beispielsweise Ethandiol, 1,3-Propandiol, 1,4-Butandiol, 1,5-Pentandiol, 1,6-Hexandiol, 1,8-Octandiol, Neopentylglykol sowie 1,4-Cyclohexandimethanol. Geeignete Naphthalindicarbonsäuren sind beispielsweise 1,4-, 1,5-, 2,6- bzw. 2,7-Naphthalindicarbonsäure. Bevorzugte Polyalkylennaphthalate sind insbesondere Polyethylen-2,6-naphthalat, Polypropylen-2,6-naphthalat, Polybutylen-2,6-naphthalat sowie Polyhexylen-2,6-naphthalat.

Die Formmasse des Tapes bzw. die Formmasse der einzelnen Schichten können die üblichen Hilfs- und Zusatzstoffe sowie gegebenenfalls weitere Polymere enthalten, im Falle des Polyarylenetherketons beispielsweise Fluorpolymere wie PFA (ein Copolymer aus Tetrafluorethen und Perfluorvinylmethylether), Polyimid, Polyetherimid, LCP wie beispielsweise flüssigkristalliner Polyester, Polysulfon, Polyethersulfon, Polyphenylsulfon, Polybenzimidazol (PBI) oder weitere hochtemperaturbeständige Polymere, im Falle des Polyphenylensulfids beispielsweise Copolymere bzw. Terpolymere von Ethylen mit polaren Comonomeren und im Falle des teilaromatischen Polyamids ein aliphatisches Polyamid. Die Polyamidformmasse kann beispielsweise auch einen Hydrolysestabilisator, einen Weichmacher bzw. Schlagzähmodifikatoren enthalten. Bei Verwendung als Anti-Wear Tape kann die Formmasse des Tapes darüber hinaus ein Schmiermittel wie Graphit, Molybdändisulfid, hexagonales Bornitrid oder PTFE enthalten. Der Anteil an olefinischem Polymer, Polyamid, Fluorpolymer, Polyalkylennaphthalat, EVOH, Polyphenylsulfon, Polyarylenetherketon, Polyphenylensulfid beziehungsweise Polyarylenetherketon/Polyphenylensulfid-Blend an der Formmasse beträgt mindestens 50 Gew.-%, bevorzugt mindestens 60 Gew.-%, besonders bevorzugt mindestens 70 Gew.-%, insbesondere bevorzugt mindestens 80 Gew.-% und ganz besonders bevorzugt mindestens 90 Gew.-%. Das Tape kann darüber hinaus auch langfaserverstärkt sein, beispielsweise mit Glasfasergewebe oder -rovings. In diesem Fall kann es auch eine weitere Schicht aus der unverstärkten Formmasse enthalten und/oder zur Reduzierung oder Substitution einer Metallarmierung dienen.

Die Breite des Tapes ist abhängig vom Rohrdurchmesser. Übliche Breiten liegen im Bereich von etwa 20 mm bis etwa 700 mm und bevorzugt im Bereich von etwa 30 mm bis etwa 500 mm. Die Dicke des Tapes ist dadurch eingegrenzt, dass es einerseits ausreichend mechanisch stabil sein muss und andererseits ausreichend flexibel, um sich noch gut wickeln zu lassen. In der Praxis besitzt das Tape daher üblicherweise eine Dicke im Bereich von 0,05 mm bis 3 mm und vorzugsweise im Bereich von 0,1 mm bis 2 mm.

Der Querschnitt des Tapes kann rechteckig sein. Es können sich aber auch an den Seiten Aussparungen befinden, so dass die überlappenden Bereiche ineinandergreifen und eine im Wesentlichen glatte Oberfläche der Wicklung ergeben. In der Regel wird eine Lage Tape überlappend gewickelt; für den Überlappungsbereich ist größenordnungsmäßig etwa 10 % der Tapebreite ausreichend. Man kann jedoch auch eine erste Lage Tape auf Stoß wickeln und darüber eine zweite Lage Tape ebenfalls auf Stoß, aber um etwa eine halbe Tapebreite versetzt.

Nach dem Wickeln wird das Tape an den Überlappungsstellen miteinander verschweißt. Dies kann entweder durch Heißgasschweißen, durch Kontakt mit einem Heizelement, mit Hilfe einer Flamme oder vorteilhafterweise durch Einstrahlen elektromagnetischer Strahlung im UV-, sichtbaren oder IR-Spektralbereich geschehen. Besonders bevorzugt sind Laserschweißen oder Infrarotschweißen. Bei Verwendung als Kriechschutztape oder als Anti-Wear-Tape reicht prinzipiell eine Punktschweißung zur Fixierung der Tapes aus; bevorzugt wird jedoch kontinuierlich eine ununterbrochene Schweißnaht erzeugt. Selbstverständlich kann man die Tapes in den Überlappungsbereichen auch vollflächig miteinander verschweißen.

Beim Laserschweißen und Infrarotschweißen zweier Bauteile ist das obere, durchstrahlte Bauteil für die verwendete Strahlung im Wesentlichen transparent, während das untere Bauteil absorbierend eingestellt ist. Um ein optimales Verschweißungsergebnis zu erzielen, ist es daher von Vorteil, wenn das Tape über die Breite hinweg unterschiedliche Absorptionseigenschaften besitzt. Dies kann durch Coextrusion einer im Wesentlichen transparenten Formmasse mit einer entsprechenden, aber absorbierend eingestellten Formmasse bewerkstelligt werden, so dass das Tape auf einer Seite einen absorbierenden Streifen besitzt, der beispielsweise eine Breite von etwa 3 bis etwa 90 % der gesamten Tapebreite besitzt. Beim Wickeln des Tapes ist dann darauf zu achten, dass die absorbierende Seite nach unten zu liegen kommt und von der transparenten Seite überdeckt wird. Alternativ hierzu kann dann, wenn zwei Lagen Tape übereinander, beispielsweise jeweils auf Stoß, gewickelt werden, das Material der unteren Tapelage einen absorbierenden Zusatz enthalten, während das Material der oberen Tapelage weitgehend transparent ist. Bei Verwendung sehr dünner Tapes kann aber auch das gesamte Tapematerial absorbierend eingestellt sein.

Laserschweißen, Infrarotschweißen sowie geeignete absorbierende Zusätze sind dem Fachmann wohlbekannt. Der gebräuchlichste absorbierende Zusatz ist Ruß, es kann aber auch jeder andere bekannte Zusatz in den üblichen Mengen verwendet werden.

Durch die erfindungsgemäße Formfixierung für Montage und Betrieb sowie die erzielte Gasdichtheit kann eine größere Designfreiheit des Unbonded Flexible Pipe erzielt werden.

## Patentansprüche

1. Verfahren zur Herstellung eines flexiblen Rohrs mehrschichtigen Aufbaus mit unverbundenen Schichten, das
a) eine innere Auskleidung und
b) eine oder mehrere Armierungsschichten enthält, die aus spiralförmig angeordneten Stahldrähten, Stahlprofilen oder Stahlbändern bestehen,
wobei eine Schicht dadurch gebildet wird, dass ein Tape aus einer Kunststoffformmasse spiralig auf eine weiter innen liegende Schicht aufgewickelt wird, wonach an Überlappungsbereichen gleichzeitig oder anschließend die obere und die untere Lage des Tapes miteinander verschweißt werden, wobei die weiter innen liegende Schicht ausgewählt ist aus einer Karkasse, einer rohrförmigen inneren Auskleidung und einer Armierungsschicht.

2. Verfahren gemäß Anspruch 1,
**dadurch gekennzeichnet,**
**dass** das Tape aus einer Formmasse auf Basis von olefinischem Polymer, Polyamid, Fluorpolymer, Polyphenylsulfon, Polyarylenetherketon, Polyphenylensulfid oder einem Polyarylenetherketon/Polyphenylensulfid-Blend besteht.

3. Verfahren gemäß einem der vorhergehenden Ansprüche,
**dadurch gekennzeichnet,**
**dass** das Tape einschichtig oder mehrschichtig ist.

4. Verfahren gemäß Anspruch 3,
**dadurch gekennzeichnet,**
**dass** das Tape mehrschichtig ist und eine Sperrschicht gegen die Diffusion von H₂S bzw. CO₂ enthält.

5. Verfahren gemäß Anspruch 4,
**dadurch gekennzeichnet,**
**dass** die Sperrschicht eine Schicht aus EVOH-Formmasse oder eine Metallfolie ist.

6. Verfahren gemäß einem der vorhergehenden Ansprüche,
**dadurch gekennzeichnet,**
**dass** das Tape langfaserverstärkt ist.

7. Verfahren gemäß einem der vorhergehenden Ansprüche,
**dadurch gekennzeichnet,**
**dass** das Verschweißen durch Heizgasschweißen, durch Kontakt mit einem Heizelement, mit Hilfe einer Flamme oder durch Einstrahlen elektromagnetischer Strahlung erfolgt.

8. Flexibles Rohr, hergestellt gemäß einem der vorhergehenden Ansprüche.

## Claims

1. Process for producing a flexible pipe of multilayer structure with unbonded layers, which comprises
a) an interior lining and
b) one or more reinforcing layers which are composed of helically arranged steel wires, steel profiles or steel strip, wherein
a layer is formed by winding a tape made of a plastics moulding composition helically onto a more internal layer, and simultaneously or subsequently welding the upper and the lower sublayer of the tape to one another at overlap regions, wherein the more internal layer has been selected from a carcass, a tubular interior lining and a reinforcing layer.

2. Process according to Claim 1,
**characterized in that**
the tape is composed of a moulding composition based on olefinic polymer, on polyamide, on fluoropolymer, on polyphenyl sulphone, on polyarylene ether ketone, on polyphenylene sulphide or on a polyarylene ether ketone/polyphenylene sulphide blend.

3. Process according to any of the preceding claims,
**characterized in that**
the tape is a single-layer tape or multilayer tape.

4. Process according to Claim 3,
**characterized in that**
the tape is a multilayer tape and comprises a barrier layer with respect to the diffusion of H₂S or CO₂.

5. Process according to Claim 4,
**characterized in that**
the barrier layer is a layer made of EVOH moulding composition, or is a metal foil.

6. Process according to any of the preceding claims,
**characterized in that**
the tape has long-fibre reinforcement.

7. Process according to any of the preceding claims,
**characterized in that**
the welding process takes place via hot-gas welding, via contact with a heated tool, with the aid of a flame or via introduction of electromagnetic radiation.

8. Flexible pipe, produced according to any of the preceding claims.

## Revendications

1. Procédé pour la fabrication d'un tuyau souple de construction multicouche présentant des couches non liées, qui contient
a) un revêtement interne et
b) une ou plusieurs couches d'armature qui sont constituées par des fils d'acier, des profilés d'acier ou des feuillards d'acier disposés en forme de spirale,
une couche étant formée en ce qu'un ruban d'une masse de moulage en matériau synthétique est enroulé sous forme de spirale sur une autre couche interne, suite à quoi la couche supérieure et la couche inférieure du ruban sont soudées simultanément ou consécutivement l'une à l'autre au niveau des zones de recouvrement, l'autre couche interne étant choisie parmi une carcasse, un revêtement interne sous forme de tuyau et une couche d'armature.

2. Procédé selon la revendication 1, **caractérisé en ce que** le ruban est constitué par une masse de moulage à base de polymère oléfinique, de polyamide, de fluoropolymère, de polyphénylsulfone, de polyarylène-éthercétone, de poly(sulfure de phénylène) ou d'un mélange polyarylène-éthercétone/poly(sulfure de phénylène).

3. Procédé selon l'une quelconque des revendications précédentes, **caractérisé en ce que** le ruban est monocouche ou multicouche.

4. Procédé selon la revendication 3, **caractérisé en ce que** le ruban est multicouche et contient une couche de blocage contre la diffusion de H₂S ou de CO₂.

5. Procédé selon la revendication 4, **caractérisé en ce que** la couche de blocage est une couche en masse de moulage d'EVOH ou une feuille métallique.

6. Procédé selon l'une quelconque des revendications précédentes, **caractérisé en ce que** le ruban est renforcé par des fibres longues.

7. Procédé selon l'une quelconque des revendications précédentes, **caractérisé en ce que** le soudage est réalisé par soudage par un gaz chaud, par contact avec un élément chauffant, à l'aide d'une flamme ou par irradiation d'un rayonnement électromagnétique.

8. Tuyau souple, fabriqué selon l'une quelconque des revendications précédentes.
